# EUROPEAN PATENT APPLICATION

(11) **EP 4 443 594 A1**
(43) Date of publication of application: **09.10.2024**
(21) Application number: 22901189.5
(22) Date of filing: 25.11.2022
(51) Int. Cl.: H01M 10/0587, H01M 4/131, H01M 10/052, H01M 10/0566, H01M 50/538, H01M 50/586, H01M 50/595

(54) **NONAQUEOUS ELECTROLYTE SECONDARY BATTERY**

(30) Priority: 30.11.2021 JP 2021193867
(71) Applicant: Panasonic Energy Co., Ltd., Osaka 570-8511 (JP)
(72) Inventor: SHIMA, Kengo, Osaka 571-0057 (JP); MIZUKOSHI, Fumikazu, Osaka 571-0057 (JP); MIZAWA, Atsushi, Osaka 571-0057 (JP)
(74) Representative: Eisenführ Speiser
(86) International application number: PCT/JP2022/043503
(87) International publication number: WO 2023/100756

(57) **Abstract**

A nonaqueous electrolyte secondary battery according to one embodiment of the present disclosure is provided with: an electrode body that is obtained by winding a first electrode and a second electrode, which are different from each other in polarity, with a separator being interposed therebetween; an electrolyte solution; and a cylindrical outer package can in which the electrode body and the electrolyte solution are contained. The first electrode comprises a collector and a mixture layer that is formed on at least a part of the surface of the collector; the surface of the first electrode is provided with a plurality of exposure parts, in which the collector is exposed, in the longitudinal direction; the plurality of exposure parts are in contact with only one of both edges of the first electrode in the width direction; a plurality of tabs are respectively connected to the exposure parts and are led out from one edge; a plurality of protection members respectively cover the exposure parts, the tabs, and portions of the mixture layer exposed in the exposure parts in the width direction; and the plurality of covered portions, in which the mixture layer is covered by the protection members, do not overlap with each other in the width direction.

## Description

### TECHNICAL FIELD

The present disclosure generally relates to a non-aqueous electrolyte secondary battery.

### BACKGROUND ART

A positive electrode and a negative electrode, which are electrodes of a non-aqueous electrolyte secondary battery, each has a current collector and a mixture layer formed on a surface of the current collector. The mixture layer includes an active material that may reversibly occlude and release Li ions. An exposed portion where the current collector is exposed is formed on a surface of the electrode, and a tab to make connection between an electrode and a battery terminal is connected to the exposed portion.

Patent Literatures 1 to 3 disclose art of forming a plurality of exposed portions on an electrode to connect a tab to each of the exposed portions for a purpose of inhibiting heat generation in the tab-connected portion. On the electrodes disclosed in Patent Literatures 1 to 3, the exposed portion is formed over an entire length in a width direction. In addition, commonly known is art of covering an exposed portion and its periphery with a protective tape to achieve safety of the battery even when a separator breaks.

### CITATION LIST

### PATENT LITERATURE

PATENT LITERATURE 1: Japanese Unexamined Patent Application Publication No. H10-261439
PATENT LITERATURE 2: Japanese Unexamined Patent Application Publication No. 2000-277155
PATENT LITERATURE 3: Japanese Unexamined Patent Application Publication No. 2002-164044

### SUMMARY

The battery has been required to have a further higher capacity in recent years. From the viewpoint of increasing the capacity, an area of the exposed portion where a mixture layer is not formed is preferably smaller. The present inventors have formed the exposed portion not over the entire length in the width direction on the electrode but have formed the exposed portion only near a portion where the tab is to be connected. The present inventors have further made intensively investigation and found that, when a covering portion covering a portion adjacent to the exposed portion in the mixture layer is formed in the width direction, the electrode may be deformed with charge and discharge due to this covering portion. When covering portions of protective tapes covering a plurality of the exposed portions are overlapped with each other, it is presumed that a stress concentrates at the portion with the overlapped covering portions to deform the electrode. The art disclosed in Patent Literatures 1 to 3 does not consider the deformation of the electrode caused by the viewpoint of increasing the capacity, and still has a room for improvement.

It is an advantage of the present disclosure to provide a non-aqueous electrolyte secondary battery having a high capacity and an electrode with inhibited deformation.

A non-aqueous electrolyte secondary battery of an aspect of the present disclosure comprises: an electrode assembly in which a first electrode and a second electrode having different polarities from each other are wound with a separator interposed therebetween; an electrolyte liquid; and a cylindrical exterior housing can housing the electrode assembly and the electrolyte liquid, wherein the first electrode has a current collector and a mixture layer formed on at least a part of a surface of the current collector, on a surface of the first electrode, a plurality of exposed portions where the current collector is exposed is formed along a longitudinal direction, the exposed portions are contacted with only one end among both ends in a width direction of the first electrode, a plurality of tabs is connected to the exposed portions and drawn out from the one end, a plurality of protective members covers the exposed portions, the tab, and a portion adjacent to the exposed portion in the mixture layer in the width direction, and a plurality of covering portions where the mixture layer is covered with the protective member is not overlapped with each other in the width direction.

According to the non-aqueous electrolyte secondary battery of an aspect of the present disclosure, the deformation of the electrode may be inhibited while reducing the area of the exposed portion in order to increase the capacity.

### BRIEF DESCRIPTION OF DRAWINGS

FIG. 1 is an axial sectional view of a cylindrical secondary battery of an example of an embodiment.
FIG. 2 is a perspective view of a wound electrode assembly comprised in the secondary battery illustrated in FIG. 1.
FIG. 3 is a front view of a positive electrode that constitutes an electrode assembly illustrated in FIG. 2 with an unwound state.
FIG. 4 is a view for describing a method for evaluating deformation of an electrode.

### DESCRIPTION OF EMBODIMENTS

Hereinafter, an example of an embodiment of a cylindrical secondary battery according to the present disclosure will be described in detail with reference to the Drawings. In the following description, specific shapes, materials, values, directions, and the like, which are examples for facilitating understanding of the present invention, may be appropriately modified with specifications of cylindrical secondary batteries. When a plurality of embodiments and modified examples are included in the following description, use in appropriate combination of characteristic portions thereof are anticipated in advance.

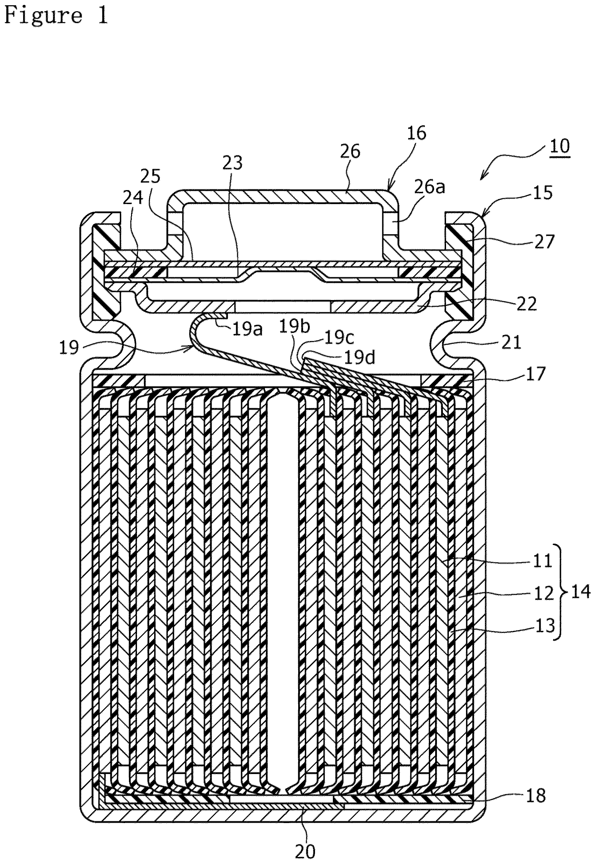

FIG. 1 is an axial sectional view of a secondary battery 10 of an example of an embodiment. In the secondary battery 10 illustrated in FIG. 1, an electrode assembly 14 and an electrolyte liquid (not illustrated) are housed in an exterior housing can 15. The electrode assembly 14 has a wound structure in which band-shaped electrodes (a positive electrode 11 and a negative electrode 12) are wound with a separator 13 interposed therebetween. For a non-aqueous solvent in the electrolyte liquid (organic solvent), carbonates, lactones, ethers, ketones, esters, and the like may be used, and two or more of these solvents may be mixed to use. When two or more of the solvents are mixed to use, a mixed solvent including a cyclic carbonate and a chain carbonate is preferably used. For example, ethylene carbonate (EC), propylene carbonate (PC), butylene carbonate (BC), and the like may be used as the cyclic carbonate, and dimethyl carbonate (DMC), ethyl methyl carbonate (EMC), diethyl carbonate (DEC), and the like may be used as the chain carbonate. For an electrolyte salt in the electrolyte liquid, LiPF₆, LiBF₄, LiCF₃SO₃, and the like, and a mixture thereof may be used. An amount of the electrolyte salt dissolved in the non-aqueous solvent is, for example, greater than or equal to 0.5 mol/L and less than or equal to 2.0 mol/L. Hereinafter, for convenience of description, a sealing assembly 16 side will be described as "the upper side", and the bottom side of the exterior housing can 15 will be described as "the lower side".

The sealing assembly 16 seals an opening of an upper end of the exterior housing can 15 to seal an inside of the secondary battery. Insulating plates 17 and 18 are provided on the upper and lower sides of the electrode assembly 14, respectively. A positive electrode tab 19 extends through a through hole in the insulating plate 17 toward upper and lower sides, and makes connection between a filter 22, which is a bottom plate of the sealing assembly 16, and the positive electrode 11 included in the electrode assembly 14. As a result, the positive electrode 11 and the sealing assembly 16 are connected, and in the secondary battery 10, a cap 26, which is a top plate of the sealing assembly 16 electrically connected to the filter 22 becomes a positive electrode terminal. A material of the positive electrode tab 19 is aluminum, for example. Meanwhile, a negative electrode tab 20 extends through an outside of the insulating plate 18 toward a bottom side of the exterior housing can 15, and welded with a bottom inner face of the exterior housing can 15. As a result, the negative electrode 12 and the exterior housing can 15 are connected, and in the secondary battery 10, the exterior housing can 15 becomes a negative electrode terminal. A material of the negative electrode tab 20 is nickel, for example.

From the electrode assembly 14, four positive electrode tabs 19a, 19b, 19c, and 19d are drawn out, and electrically connected to each other. In the present embodiment, only the positive electrode tab 19a is connected to the filter 22, but the connection state of the positive electrode tabs 19 is not limited to this example. The positive electrode tabs 19 drawn out from the electrode assembly 14 may be directly connected to the sealing assembly 16 as the present embodiment, or may be connected to the sealing assembly 16 via a known current collecting member.

A number of the positive electrode tabs 19 drawn out from the electrode assembly 14 may be any as long as it is a plurality, that is, greater than or equal to two. The plurality of the tabs drawn out from the electrode assembly 14 may reduce connection resistance between the positive electrode 11 and the sealing assembly 16, and may consequently improve output characteristics of the secondary battery 10. The number of the positive electrode tabs 19 is preferably greater than or equal to two and less than or equal to ten, and more preferably greater than or equal to three and less than or equal to six.

The aspects of the positive electrode tabs 19 and the negative electrode tab 20 are not limited to the examples of the present embodiment. For example, a plurality of the positive electrode tabs 19 and a plurality of the negative electrode tabs 20 may be drawn out from the electrode assembly 14, or one positive electrode tab 19 and a plurality of the negative electrode tabs 20 may be drawn out from the electrode assembly 14. In the present embodiment, a case where the first electrode is the positive electrode 11 and the second electrode is the negative electrode 12 will be described, but the first electrode may be the negative electrode 12. That is, at least one of the positive electrode 11 and the negative electrode 12 corresponds to the first electrode.

The exterior housing can 15 is, for example, a metallic bottomed cylindrical exterior housing can. A gasket 27 is provided between the exterior housing can 15 and the sealing assembly 16 to achieve sealability inside the secondary battery 10. The exterior housing can 15 has a grooved portion 21 formed by, for example, pressing the side wall thereof from the outside to support the sealing assembly 16. The grooved portion 21 is preferably formed circularly along the circumferential direction of the exterior housing can 15, and supports the sealing assembly 16 with the upper face thereof.

The sealing assembly 16 has a stacked structure of a filter 22, a lower vent member 23, an insulating member 24, an upper vent member 25, and a cap 26 in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of centers thereof, and the insulating member 24 is interposed between each of the circumferences thereof. If the internal pressure of the battery increases due to abnormal heat generation, for example, the lower vent member 23 breaks and thus the upper vent member 25 expands toward the cap 26 side to be separated from the lower vent member 23, resulting in cutting off of an electrical connection between both the members. If the internal pressure further increases, the upper vent member 25 breaks, and gas is discharged through an opening 26a of the cap 26.

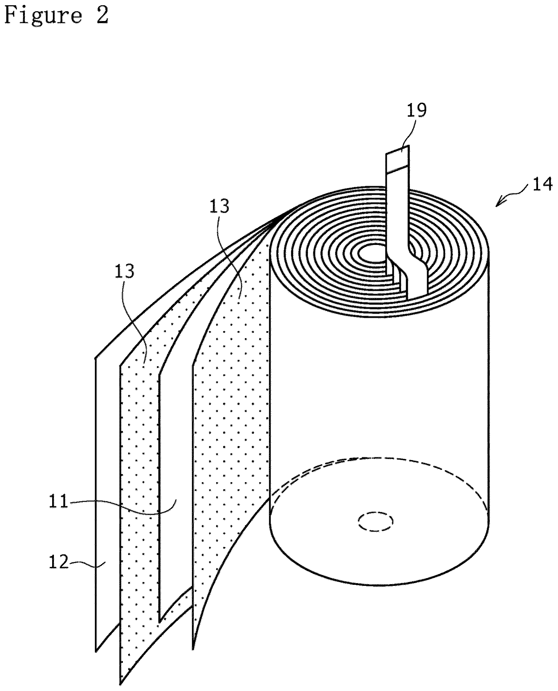

Next, the electrode assembly 14 will be described with reference to FIG. 2. FIG. 2 is a perspective view of the electrode assembly 14. As described above, the electrode assembly 14 has a wound structure in which the positive electrode 11 and the negative electrode 12 are spirally wound with the separator 13 interposed therebetween. All of the positive electrode 11, the negative electrode 12, and the separator 13 are formed in a band shaped, and spirally wound around a winding core disposed along a winding axis to be alternately stacked in the radial direction of the electrode assembly 14. In the radial direction, a winding axis side is referred to as an inner peripheral side, and the opposite side thereof is referred to as an outer peripheral side. In the electrode assembly 14, the longitudinal direction of the positive electrode 11 and the negative electrode 12 becomes a winding direction, and the width direction of the positive electrode 11 and the negative electrode 12 becomes an axial direction.

The positive electrode tabs 19 are drawn out from four positions on an upper face of the electrode assembly 14 in the axial direction. The positive electrode tabs 19 are arrayed in substantially one line in the radial direction from the winding center in the present embodiment, but the layout of the positive electrode tabs 19 is not limited to this example. For example, the positive electrode tabs 19 may be arrayed in substantially one line in the radial direction across the winding center, and may be disposed with substantially same angles with the winding center as a center. Disposition of the positive electrode exposed portions 34, described later, may be appropriately changed according to the disposing direction of the positive electrode tabs 19.

The negative electrode 12 included in the electrode assembly 14 is typically formed to be larger than the positive electrode 11 to prevent precipitation of lithium on the negative electrode 12. In specific, a length of the negative electrode 12 in the width direction is larger than a length of the positive electrode 11 in the width direction. In addition, a length of the negative electrode 12 in the longitudinal direction is larger than a length of the positive electrode 11 in the longitudinal direction. As a result, at least a portion on which a positive electrode mixture layer 32 of the positive electrode 11 is formed is disposed opposite to a portion on which a negative electrode mixture layer of the negative electrode 12 is formed with the separator 13 interposed therebetween when wound as the electrode assembly 14.

The negative electrode 12 has a band-shaped negative electrode current collector and a negative electrode mixture layer formed on at least a part of a surface of the negative electrode current collector. The negative electrode mixture layer is formed on at least one of the inner peripheral side and outer peripheral side of the negative electrode current collector, and preferably formed on an entire region of both surfaces of the negative electrode current collector except for a negative electrode exposed portion, described later. For the negative electrode current collector, a foil of a metal such as copper, a film in which such a metal is disposed on a surface layer thereof, and the like are used, for example. A thickness of the negative electrode current collector is, for example, greater than or equal to 5 µm and less than or equal to 30 µm.

The negative electrode mixture layer preferably includes a negative electrode active material and a binder. The negative electrode mixture layer may be produced by, for example, applying a negative electrode mixture slurry including the negative electrode active material, the binder, and a solvent such as water on both the surfaces of the negative electrode current collector, and drying and then rolling the coating.

The negative electrode active material included in the negative electrode mixture layer is not particularly limited as long as it may reversibly occlude and release lithium ions. For example, carbon-based materials such as natural graphite and artificial graphite, metals that form an alloy with lithium, such as Si and Sn, an alloy and oxide including these materials, or the like may be used.

The negative electrode active material may include the carbon-based material and a silicon-based material. Examples of the silicon-based material include Si, an alloy including Si, and silicon oxide such as SiOₓ (x represents 0.8 to 1.6). The silicon-based material is a negative electrode active material that may more increase the battery capacity than the carbon-based material. A content rate of the silicon-based material in the negative electrode active material is preferably greater than or equal to 3 mass% relative to a mass of the negative electrode active material from the viewpoints of increasing the battery capacity, inhibiting deterioration in the charge-discharge cycle characteristic, and the like. An upper limit of the content rate of the silicon-based material is, for example, 20 mass%.

Examples of the binder included in the negative electrode mixture layer include styrene-butadiene rubber (SBR), nitrile butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). The binder may include fluororesins such as polytetrafluoroethylene (PTFE) and polyvinylidene fluoride (PVDF), polyacrylonitrile (PAN), a polyimide resin, an acrylic resin, and a polyolefin resin. These materials may be used singly, or a plurality of kinds thereof may be mixed to use.

On an end on a terminal winding side of the negative electrode 12, a negative electrode exposed portion where the negative electrode current collector is exposed is formed. The negative electrode exposed portion is a portion where the surface of the negative electrode current collector is uncovered with the negative electrode mixture layer, and preferably formed on both the surfaces of the negative electrode 12 so as to be stacked in a thickness direction of the negative electrode 12. The negative electrode exposed portion is formed by, for example, intermittent application in which the negative electrode mixture slurry is not applied on a part of the negative electrode current collector. The negative electrode tab 20 is connected to the negative electrode exposed portion by ultrasonic welding or the like.

For the separator 13, a porous sheet having an ion permeation property and an insulation property is used. Specific examples of the porous sheet include a fine porous thin film, a woven fabric, and a nonwoven fabric. As a material of the separator 13, an olefin resin such as polyethylene and polypropylene is preferable. A thickness of the separator 13 is, for example, greater than or equal to 10 µm and less than or equal to 50 µm. The separator 13 has tended to be thinned as higher capacity and higher output of the battery. The separator 13 has a melting point of, for example, approximately greater than or equal to 130°C and less than or equal to 180°C.

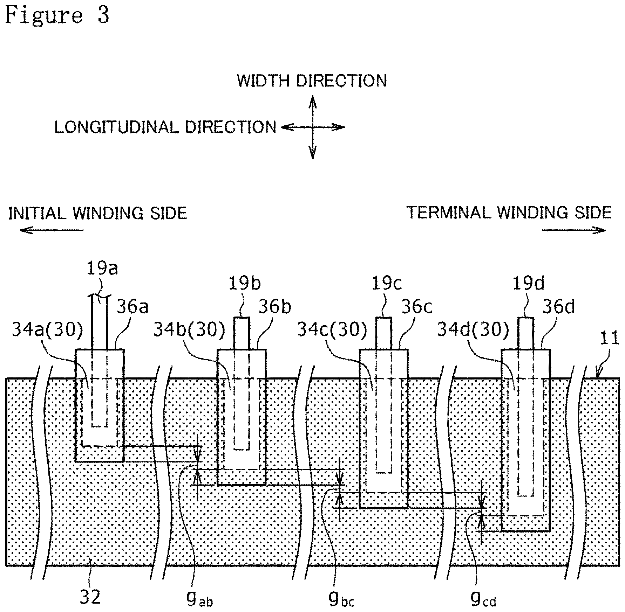

Next, the positive electrode 11 according to the present embodiment will be described in detail with reference to FIG. 3. FIG. 3 is a front view of the positive electrode 11 constituting the electrode assembly 14. FIG. 3 illustrates the positive electrode 11 in an unwound state.

The positive electrode 11 has a band-shaped positive electrode current collector 30 and a positive electrode mixture layer 32 formed on at least a part of a surface of the positive electrode current collector 30. The positive electrode mixture layer 32 is formed on at least one of the inner peripheral side and outer peripheral side of the positive electrode current collector 30, and preferably formed on an entire region of both surfaces of the positive electrode current collector 30 except for positive electrode exposed portions 34, described later. For the positive electrode current collector 30, a foil of a metal such as aluminum, a film in which such a metal is disposed on a surface layer thereof, and the like are used, for example. A thickness of the positive electrode current collector 30 is, for example, greater than or equal to 10 µm and less than or equal to 30 µm.

The positive electrode mixture layer 32 preferably includes a positive electrode active material, a conductive agent, and a binder. The positive electrode mixture layer 32 may be produced by, for example, applying a positive electrode mixture slurry including the positive electrode active material, the conductive agent, the binder, and a solvent such as N-methyl-2-pyrrolidone (NMP) on both the surfaces of the positive electrode current collector 30, and drying and then rolling.

Examples of the positive electrode active material included in the positive electrode mixture layer 32 include a lithium-transition metal oxide containing transition metal elements such as Co, Mn, and Ni. The lithium-transition metal oxide is, for example, LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, or Li₂MPO₄F, wherein M represents at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3. These may be used singly, or a plurality of kinds thereof may be mixed to use. In terms of attempting a higher capacity of the non-aqueous electrolyte secondary battery, the positive electrode active material preferably includes a lithium-nickel composite oxide such as LiₓNiO₂, LiₓCo_{y}Ni_{1-y}O₂, and LiₓNi_{1-y}M_{y}O₂, wherein M represents at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3.

Examples of the conductive agent included in the positive electrode mixture layer 32 include carbon particles such as carbon black (CB), acetylene black (AB), Ketjenblack, carbon nanotube (CNT), graphene, and graphite. These may be used singly, or a plurality of kinds thereof may be mixed to use.

Examples of the binder included in the positive electrode mixture layer 32 include fluororesins such as polytetrafluoroethylene (PTFE) and polyvinylidene fluoride (PVDF), polyacrylonitrile (PAN), a polyimide resin, an acrylic resin, and a polyolefin resin. These may be used singly, or a plurality of kinds thereof may be mixed to use. When the positive electrode mixture slurry is prepared in an aqueous solvent, styrene-butadiene rubber (SBR), nitrile rubber (NBR), CMC or a salt thereof, polyacrylic acid or a salt thereof, polyvinyl alcohol, and the like may be used.

As illustrated in FIG. 3, four positive electrode exposed portions 34, namely positive electrode exposed portions 34a, 34b, 34c, and 34d, are formed on the surface of the positive electrode 11 in this order along the longitudinal direction from the initial winding side. The positive electrode exposed portions 34 are portions where the surface of the positive electrode current collector 30 is not covered with the positive electrode mixture layer 32. The positive electrode exposed portions 34 are formed by, for example, intermittent application in which the positive electrode mixture slurry is not applied on a part of the positive electrode current collector 30. A number of the positive electrode exposed portions 34 is not limited to four, and preferably same as a number of the positive electrode tabs 19.

The positive electrode exposed portions 34 are contacted with only one end among both ends in the width direction of the positive electrode 11. The positive electrode exposed portions 34 have, for example, a substantially rectangular shape, and have the terminals in the width direction. The positive electrode exposed portions 34a, 34b, 34c, and 34d are arrayed so that the length along the width direction of the positive electrode 11 becomes larger from the initial winding side to the terminal winding side. This arrangement may prevent the covering positions from overlapping with each other in the width direction of the positive electrode 11 as described later. The positive electrode exposed portions 34 may not be arrayed in the length order in the longitudinal direction. Although all the lengths of the positive electrode exposed portions 34 in the longitudinal direction of the positive electrode 11 are same in the present embodiment, the lengths may be different. The positive electrode exposed portions 34 are preferably provided on both the surfaces of the positive electrode 11 so as to be overlapped in the thickness direction of the positive electrode 11.

The positive electrode tabs 19a, 19b, 19c, and 19d are connected to the positive electrode exposed portions 34a, 34b, 34c, and 34d, respectively at substantial centers in the width direction. The positive electrode tabs 19 are bonded to the positive electrode exposed portions 34 by, for example, ultrasonic welding. The positive electrode tabs 19 are drawn out from one end in the width direction of the positive electrode 11.

The ends of the positive electrode tabs 19 are not overlapped with each other in the width direction of the positive electrode 11. In the width direction of the positive electrode 11, the ends of the positive electrode tabs 19 are preferably near the terminals of the positive electrode exposed portions 34. This may allow the positive electrode tabs 19 to be connected with the positive electrode exposed portions 34 with a long distance along the width direction of the positive electrode 11, and thereby a contacting area between the positive electrode tabs 19 and the positive electrode current collector 30 increases to improve current collectability.

The positive electrode exposed portions 34 and the positive electrode tabs 19 are covered with a protective member 36. More specifically, the protective member 36 covers the positive electrode tabs 19, the positive electrode exposed portions 34, and a part of the positive electrode mixture layer 32. The protective member 36 is an insulative member to prevent internal short circuit of the positive electrode tabs 19 and the positive electrode exposed portions 34 with the opposite negative electrode mixture layer if the separator 13 breaks.

The protective member 36 is, for example, an adhesive tape having a base part and an adhesive part formed on one surface of the base part. Between the base part and the adhesive part, a heat-resistant layer including inorganic particles such as a metal oxide may be provided, for example. The base part is an insulative resin, and for example, polyphenylene sulfide (PPS), polyether ether ketone (PEEK), polyimide (PI), polypropylene (PP), polyethylene terephthalate (PET), polybutylene terephthalate (PBT), and the like may be used. A thickness of the base part is, for example, greater than or equal to 5 µm and less than or equal to 50 µm.

The adhesive part is a portion for the protective member 36 to adhere to the surface of the positive electrode 11. A thickness of the adhesive part is, for example, greater than or equal to 1 µm and less than or equal to 30 µm. The adhesive part may include at least one of a rubber polymer and an acrylic polymer. Since having adhesiveness, the rubber polymer and the acrylic polymer may allow the protective member 36 to adhere to the surface of the positive electrode 11. Into the adhesive part, a silicone polymer may be further added, for example.

The protective member 36 has covering portions covering portions adjacent to the positive electrode exposed portions 34 in the positive electrode mixture layer 32 in the width direction of the positive electrode 11. That is, the protective member 36 has a length larger than the lengths of the positive electrode exposed portions 34 in the width direction of the positive electrode 11, and adheres to the surface of the positive electrode mixture layer 32 with the covering portions. Therefore, the covering portion is thicker than other portion in the face direction of the positive electrode 11. The protective member 36 has a length larger than the length of the positive electrode exposed portions 34 also in the longitudinal direction of the positive electrode 11, and adheres to the surface of the positive electrode mixture layer 32.

A plurality of the covering portions corresponding to the positive electrode exposed portions 34a, 34b, 34c, and 34d is not overlapped with each other in the width direction of the positive electrode 11. In FIG. 3, gaps g_{ab}, g_{bc}, and g_{cd} are present between the positive electrode exposed portions 34. With this configuration, the covering portions thicker than the other portion are shifted in the width direction of the positive electrode 11 when the positive electrode 11 is wound to form the electrode assembly 14, and thereby concentration of stress may be prevented to inhibit deformation of the electrode.

### EXAMPLES

Hereinafter, the present disclosure will be further described with Examples, but the present disclosure is not limited to these Examples.

### [Production of Positive Electrode]

Mixing 100 parts by mass of LiNi_{0.88}Co_{0.09}Al_{0.03}O₂, 1.0 part by mass of acetylene black (AB), and 0.9 parts by mass of polyvinylidene fluoride (PVDF) was performed, and an appropriate amount of N-methyl-2-pyrrolidone (NMP) was added to prepare a positive electrode mixture slurry. Then, this positive electrode mixture slurry was applied on both surfaces of a band-shaped positive electrode current collector made of aluminum foil with 15 µm in thickness so as to form four positive electrode exposed portions. As the example illustrated in FIG. 3, the lengths of the positive electrode exposed portions in the width direction of the positive electrode were set to be larger from an initial winding side to a terminal winding side. This applied film was dried and then rolled, and cut to a predetermined electrode plate size to produce a positive electrode in which positive electrode mixture layers were formed on both the surface of the positive electrode current collector with 861 mm in entire length and 62.6 mm in width. A positive electrode tab made of aluminum was welded with each of the positive electrode exposed portions. With the positive electrode exposed portion of the most initial winding side, the longest positive electrode tab was welded in order to be welded with a sealing assembly.

### [Production of Negative Electrode]

Mixing 95 parts by mass of graphite, 5 parts by mass of SiO, 1 part by mass of carboxymethylcellulose (CMC), and 1 part by mass of styrene-butadiene rubber (SBR) was performed, and an appropriate amount of water was added to prepare a negative electrode mixture slurry. Then, this negative electrode mixture slurry was applied on both surfaces of a band-shaped negative electrode current collector made of copper foil with 8 µm in thickness so as to form a negative electrode exposed portion on an end on the terminal winding side. This applied film was dried and then rolled, and cut to a predetermined electrode plate size to produce a negative electrode in which negative electrode mixture layers were formed on both the surface of the positive electrode current collector with 959 mm in entire length and a width of 64.2 mm. A negative electrode tab made of nickel was welded with the negative electrode exposed portion.

### [Preparation of Non-Aqueous Electrolyte]

Into 100 parts by mass of a mixed solvent composed of ethylene carbonate (EC) and dimethyl carbonate (DMC) (EC:DMC = 1:3 at a volume ratio), 5 parts by mass of vinylene carbonate (VC) was added. Into this mixed solvent, LiPF₆ was dissolved so that the concentration was 1.5 mol/L to prepare a non-aqueous electrolyte.

### [Production of Secondary Battery]

The above positive electrode and the negative electrode were wound with a separator made of a polyolefin resin interposed therebetween to produce an electrode assembly. Insulating plates were disposed on upper and lower sides of the above electrode assembly respectively, and the electrode assembly was housed in a cylindrical exterior housing can. Then, a negative electrode tab was welded with a bottom of the exterior housing can, and the positive electrode tabs were welded with each other and the longest positive electrode tab was then welded with a sealing assembly. Thereafter, the electrolyte was injected inside the exterior housing can by a pressure reducing method, and then an opening end of the exterior housing can was sealed to be caulked to the sealing assembly with a gasket interposed therebetween to produce a secondary battery. A designed capacity of the produced secondary battery was 4600 mAh.

### <Comparative Example>

A secondary battery was produced in the same manner as in Example except that, in the production of the positive electrode, the lengths of all the positive electrode exposed portions in the width direction of the positive electrode were set to be same as each other.

### [Evaluation of Electrode Plate Deformation]

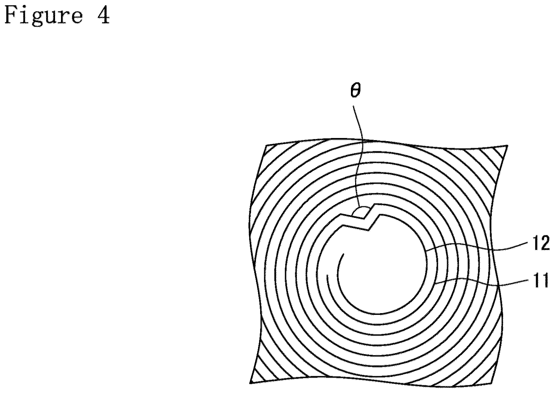

The above secondary battery was charged at a constant current of 1380 mA (0.3 It) until a battery voltage reached 4.2 V, and then charged at a constant voltage of 4.2 V until a current reached 92 mA (0.02 It). Thereafter, the secondary battery was discharged at a constant current of 4600 mA (1.0 It) until the battery voltage reached 2.7 V. This charge-discharge cycle was performed with 100 cycles with inserting an interval time of 20 minutes between the cycles. The non-aqueous electrolyte secondary battery after the 100 cycles was charged at a constant current of 1380 mA (0.3 It) until the battery voltage reached 4.2 V, and then charged at a constant voltage of 4.2 V until the current reached 92 mA (0.02 It) to prepare a charged state. The non-aqueous electrolyte secondary battery in this charged state was subjected to a cross-sectional observation near the winding center of the electrode assembly by using an X-ray CT apparatus (manufactured by SHIMADZU CORPORATION, SMX-225CT FPD HR). A case where deformation (bending) of an electrode plate (at least one of the positive electrode and the negative electrode) with an angle θ less than or equal to 150° was observed as illustrated in FIG. 4 was judged as presence of electrode plate deformation. Presence or absence of the electrode plate deformation was evaluated.

Table 1 summarizes the evaluation results of the secondary batteries of Example and Comparative Example.

**[Table 1]**

| | Electrode plate deformation |
|---|---|
| Example | Absent |
| Comparative Example | Present |

The battery of Comparative Example caused the electrode plate deformation, but the battery of Example did not cause the electrode plate deformation. Therefore, it is found that the electrode plate deformation of the battery may be inhibited by setting the covering portions not to be overlapped with each other in the width direction.

### REFERENCE SIGNS LIST

10 Secondary battery, 11 Positive electrode, 12 Negative electrode, 13 Separator, 14 Electrode assembly, 15 Exterior housing can, 16 Sealing assembly, 17, 18 Insulating plate, 19, 19a, 19b, 19c, 19d Positive electrode tab, 20 Negative electrode tab, 21 Grooved portion, 22 Filter, 23 Lower vent member, 24 Insulating member, 25 Upper vent member, 26 Cap, 26a Opening, 27 Gasket, 30 Positive electrode current collector, 32 Positive electrode mixture layer, 34, 34a, 34b, 34c, 34d Positive electrode exposed portion, 36, 36a, 36b, 36c, 36d Protective member

## Claims

1. A non-aqueous electrolyte secondary battery, comprising:
an electrode assembly in which a band-shaped first electrode and a band-shaped second electrode having different polarities from each other are wound with a separator interposed therebetween;
an electrolyte liquid; and
a cylindrical exterior housing can housing the electrode assembly and the electrolyte liquid, wherein
the first electrode has a current collector and a mixture layer formed on at least a part of a surface of the current collector,
on a surface of the first electrode, a plurality of exposed portions where the current collector is exposed is formed along a longitudinal direction,
the exposed portions are contacted with only one end among both ends in a width direction of the first electrode,
a plurality of tabs is connected to the exposed portions and drawn out from the one end,
a plurality of protective members covers the exposed portions, the tab, and a portion adjacent to the exposed portion in the mixture layer in the width direction, and
a plurality of covering portions where the mixture layer is covered with the protective member is not overlapped with each other in the width direction.

2. The non-aqueous electrolyte secondary battery according to claim 1, wherein ends of the plurality of the tabs are not overlapped with each other in the width direction.

3. The non-aqueous electrolyte secondary battery according to claim 1 or 2, wherein the first electrode is a positive electrode.
